# EUROPEAN PATENT APPLICATION

(11) **EP 2 626 535 A2**
(43) Date of publication of application: **14.08.2013**
(21) Application number: 13154235.9
(22) Date of filing: 06.02.2013
(51) Int. Cl.: F02C 7/047

(54) **System and method for gas turbine inlet air heating**

(30) Priority: 07.02.2012 US 201213367709
(71) Applicant: General Electric Company, Schenectady, New York 12345 (US)
(72) Inventor: Zhang, Jianmin, Greenville, SC South Carolina 29615 (US); Tomey, James Patrick, Greenville, SC South Carolina 29615 (US)
(74) Representative: Cleary, Fidelma

(57) **Abstract**

A gas turbine system for part load efficiency improvement and anti-icing within the inlet (16) and at the compressor inlet is described. The system includes a gas turbine (12) having a compressor (13) which receives inlet-air (18). A direct-contact heat exchanger (30) heats the inlet-air (18) before the inlet-air (18) flows through the inlet (16) and to the compressor (13). Heating the inlet-air (18) reduces an output of the gas turbine (12) and extends the turndown range, and avoids ice-forming conditions within the inlet (16) and at the compressor inlet bellmouth. The direct-contact heat exchanger (30) may also be configured to act as an evaporative cooler, air chiller, or to use liquid dessicant.

## Description

### FIELD OF THE INVENTION

The subject matter disclosed herein relates generally to gas turbines, and more specifically to methods and apparatus for operating gas turbines.

### BACKGROUND OF THE INVENTION

The present invention relates to the operation of a gas turbine, and more particularly to systems and methods for anti-icing and part load efficiency improvement in a gas turbine.

Turbomachines, such as gas turbines, aero-derivatives, or the like, commonly operate in a combined-cycle and/or cogeneration mode. In combined-cycle operation, a heat recovery steam generator, which generates steam, receives the exhaust-gas from the gas turbine; the steam then flows to a steam turbine that generates additional electricity. In a co-generation operation, a portion of the steam generated by the heat recovery steam generator is sent to a separate process requiring the steam.

Combined-cycle and cogeneration plants are rated to generate the maximum amount of energy (mechanical, electrical, etc.) while operating at baseload. However, baseload operation, though desired by operators, is not always feasible. There may not be a demand in the energy market (electrical grid, or the like) for all of the energy generated at baseload. Here, the powerplant must either shutdown or operate at partload, where less than the maximum amount of energy is generated. Furthermore, partload operation tends to decrease the overall efficiency and increase the heat rate of the powerplant.

Gas turbines typically require avoidance of ice-forming conditions within the inlet, especially at the compressor inlet bellmouth, while generating power. A gas turbine operating at a low ambient temperature may not be able to maintain ice-free inlet airflow. Inlet heating may be considered to allow operators to maintain ice-free airflow within the inlet and compressor entrance, thereby avoiding excessive pressure drop due to ice formation or ice abrasion of compressor blades.

An inlet air heating system may reduce the extent of the aforementioned disadvantages associated with operating a gas turbine at partload and low ambient temperature conditions. Conventional approaches have focused on utilization of exhaust gas from the heat recovery steam generator, or addition of separate heating mechanisms such as inlet heating coils, which can be quite costly. As such, an approach that minimizes hardware and installation would be desirable.

A gas turbine may require higher output at baseload operation at warmer temperatures to meet peak demand. This is typically achieved by utilizing inlet air evaporative cooler or chiller systems. Current approaches have these augmentation options separate from inlet heating systems. Additional separate systems within the gas turbine inlet contribute to system cost, complexity, and inlet pressure drop.

For the foregoing reasons, there is a need for a gas turbine with an inlet air direct-contact heating system. Methods related to the same should allow for inlet and compressor inlet anti-icing and extension of the turndown range. The systems and methods should allow for a reduction in the fuel consumed by the gas turbine while operating at the partload range. Further, the methods and systems should also be flexibly capable of providing inlet air evaporative cooling and chilling within the same structure to increase gas turbine power output at baseload.

### BRIEF DESCRIPTION OF THE INVENTION

Aspects and advantages of the invention will be set forth in part in the following description, or may be obvious from the description, or may be learned through practice of the invention.

In one aspect of the present disclosure, a gas turbine system for part load efficiency improvement is described. The system includes a gas turbine having a compressor which receives inlet-air. A direct-contact heat exchanger heats the inlet-air before the inlet-air flows to the compressor. Heating the inlet-air reduces the inlet air density and turbine mass flow and therefore lowers an output of the gas turbine and extends the turndown range.

In another aspect, a method of controlling a gas turbine system operation for part load efficiency improvement and anti-icing of the inlet and compressor inlet bellmouth is described. The method includes utilizing a direct-contact heat exchanger to heat the inlet-air within the inlet and before the inlet-air flows to a gas turbine compressor to reduce the inlet air density and turbine mass flow and therefore lower an output and extend the turndown range.

In an alternate aspect of the invention, a method of controlling a gas turbine system operation for part load efficiency improvement and anti-icing of the inlet and compressor inlet bellmouth while also providing capability to provide evaporative cooling or chilling of the inlet air at baseload is described. The method includes utilizing a direct-contact heat exchanger to heat, cool, or chill the inlet-air within the inlet and before the inlet-air flows to a gas turbine compressor for purposes of extending turndown range, anti-icing at low ambient temperatures, or increasing turbine power output at baseload.

These and other features, aspects, and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWING

Embodiments of the present invention will now be described, by way of example only, with reference to the accompanying drawings in which:

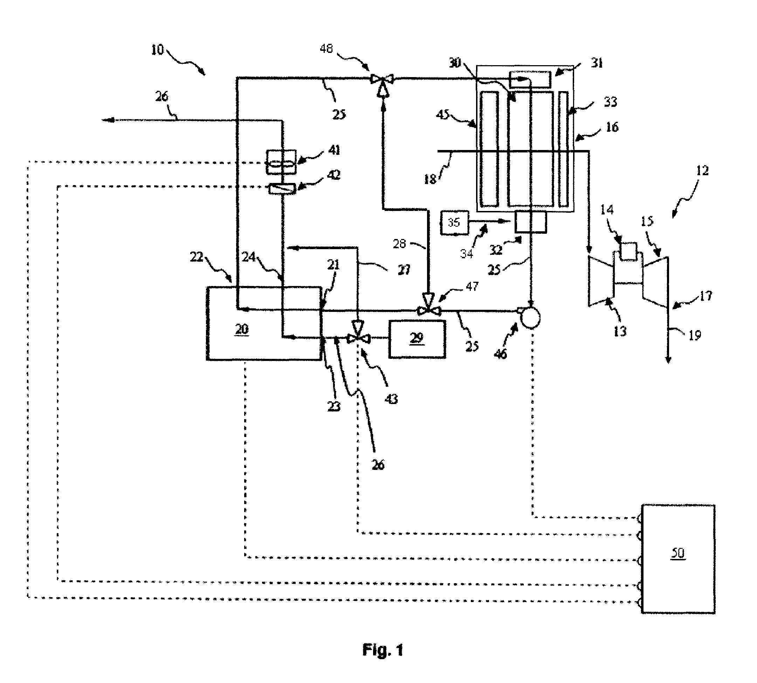

Fig. 1 provides a schematic diagram of the gas turbine in accordance with various aspects of the present disclosure.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment, can be used with another embodiment to yield a still further embodiment. Thus, it is intended that the present invention covers such modifications and variations as come within the scope of the appended claims and their equivalents.

The present invention extends the turndown range by heating the inlet-air. In accordance with the present disclosure, the extended turndown range is from about 5% to about 70% of the maximum rated load of the gas turbine. Generally, the output (electrical, mechanical, or the like) of a gas turbine is governed by the amount of mass-flow entering the compressor. The mass-flow may be considered the product of the density and the volume-flow of the inlet-air entering the compressor. The amount of volume-flow entering the compressor may vary on the ambient temperature conditions and the angle of Variable Inlet Guide Vanes (IGVs), if present, on the gas turbine. The IGV angle may determine the flow area at the inlet of the compressor. The IGV angle may be reduced to a minimum angle, limiting the amount of turndown. At the minimum IGV angle, a corresponding minimum volume-flow is drawn into the compressor.

In accordance with the present disclosure, the heating of the inlet-air decreases the density, allowing less dense inlet-air to enter the compressor. Here, at a given load point, the volume-flow entering the compressor may remain constant, however the mass-flow decreases due to the decrease in density of the inlet-air. As discussed, the output of the gas turbine may be determined by the mass-flow entering the gas turbine; therefore less output is produced due to the heating of the inlet-air, compared to not heating of the inlet-air.

Fig. 1 is a schematic diagram of a gas turbine inlet heating system 10 in accordance with various aspects of the present disclosure, the system operably connected to a gas turbine 12. The gas turbine 12 may include a compressor 13, combustor 14, and turbine 15. The gas turbine 12 may further include, for example, more than one compressor, more than one combustor, and more than one turbine (not shown). The gas turbine 12 may include a gas turbine inlet 16. The inlet 16 may be configured to receive gas turbine inlet air flow 18. For example, in one embodiment, the inlet 16 may be a gas turbine inlet filter house. The gas turbine 12 may further include a gas turbine exhaust outlet 17. The outlet 17 may be configured to discharge gas turbine exhaust flow 19. In one embodiment, the exhaust flow 19 may be directed to a heat recovery steam generator ("HRSG") (not shown). In another embodiment, the exhaust flow 19 may be dispersed into ambient air. In another embodiment, the exhaust flow 19 may be directed directly to a heat exchanger as described further herein.

The present system can be energy efficient when, for example, waste heat is used as the heat source. For example, in one embodiment, the heat source 29 may be generated by the gas turbine 12. For example, the heat source 29 may be gas turbine exhaust 19. In another embodiment, the heat source 29 may be generated by a HRSG. For example, the heat source 29 may be HRSG water or HRSG steam. In other embodiments, the heat source 29 may be any waste steam, such as steam turbine sealing steam, waste hot water, generator cooling water, or heat flow generated by any heat-producing process. It should be understood that the heat source 29 is not limited to waste heat and exhaust heat sources, but may be supplied through any heating method, such as, for example, solar heating, auxiliary boiler heating or geothermal heating.

Heat source 29 is utilized to heat heating fluid flow 25 in the heat exchanger 20. For example, in one embodiment, the heat exchanger 20 may be an absorption chiller plant system that heats the fluid flow 25. In this regard, the gas turbine inlet heating system 10 includes open heat exchanger 30. In one embodiment, the heat exchanger 30 may be configured to allow the heating fluid flow 25 to pass through the heat exchanger 30. For example, the heat exchanger 30 may include a heating fluid inlet 31 and a heating fluid outlet 32. In one embodiment, the heating fluid inlet 31 may be a nozzle. In another embodiment, the heating fluid inlet 31 may be a plurality of heating inlets 31. For example, the heating fluid inlet 31 may be a plurality of nozzles. The heating fluid inlet 31 may act to communicate the heating fluid flow 25 to the heat exchanger 30.

In an exemplary aspect of an embodiment, the heating fluid outlet 32 may include a sump disposed downstream of the heat exchanger 30 in the direction of heating fluid flow 25. The sump may be configured to collect the heating fluid flow 25 after it has passed through the heat exchanger 30.

Heat exchanger 30 may be configured to receive inlet air flow 18. For example, in one embodiment, heat exchanger 30 may be situated upstream of the gas turbine inlet 16 in the direction of inlet air flow 18. In one embodiment, the heat exchanger 30 may be situated adjacent to the gas turbine inlet 16. In another embodiment, the heat exchanger 30 may be situated inside the gas turbine inlet 16. Inlet air flow 18 may be directed through heat exchanger 30 before entering gas turbine inlet 16 or compressor 13.

The heat exchanger 30 may be configured to heat the inlet air flow 18 as the inlet air flow 18 passes through the heat exchanger 30. For example, the heat exchanger 30 may be configured to allow inlet air flow 18 passing through the heat exchanger 30 to interact with the heating fluid flow 25, thereby heating the inlet air flow 18. In one embodiment, the inlet air flow 18 may be directed through the heating fluid flow 25, such that cooling is transferred from the inlet air flow 18 to the heating fluid flow 25, thereby heating the inlet air flow 18.

In another exemplary aspect of an embodiment, the heat exchanger 30 may be a direct-contact heat exchanger. For example, the heat exchanger 30 may be a media-type direct-contact heat exchanger. The media may be arranged in a structured pattern, a random pattern, or in any pattern known in the art. The media may comprise cellulose-based media, plastic-based media, metal-based media, ceramic-based media, glass fiber-based media, synthetic fiber-based media or any media or combination of media known in the art. In one embodiment, heating fluid flow 25 may be directed in a generally downward direction over the media surface. In one embodiment, the inlet air flow 18 may be directed through the heat exchanger 30 in a direction substantially perpendicular to the direction of the heating fluid flow 25.

In yet another exemplary aspect of an embodiment, the heat exchanger 30 may only receive water flow 28 of temperature close to the ambient. As the non-heated water flow 28 is in direct-contact to the inlet-air 18, the heat exchanger 30 may function as an evaporative cooler known to the art.

Also in another exemplary embodiment, the heat exchanger 30 may only receive fluid flow 25 that is chilled. For example, the heat exchanger 20 could be an absorption chiller plant that chills the fluid flow 25. As the chilled fluid flow 25 is in direct-contact to the inlet-air 18, the heat exchanger 30 may function as an air chiller known to the art.

In certain embodiments, the heating fluid may be pure water, water with mineral additives, water with glycol, water with liquid desiccant, or any other fluid or fluid combination known to those skilled in the art. In one embodiment, heating fluid flow 25 contains liquid desiccant constituents, and the liquid desiccant suppresses the water vapor that can release into the inlet-air - this is advantageous since the evaporation of water from the heating fluid is counterproductive to sensible heating.

Generally, the temperature of the unheated inlet-air 18 may be determined by the ambient conditions or the outlet temperature of any air conditioning system (not illustrated) located upstream of the present inlet heating system 10. An embodiment of the present invention may increase the temperature of the inlet-air to any temperature allowed for by the inlet heating system. For example, the system 10 may increase the temperature of the inlet-air 18 from approximately 59 degrees Fahrenheit to approximately 120 degrees Fahrenheit. In certain embodiments, the inlet-air is heated to a range of about 10 to about 200 degrees Fahrenheit above an unheated temperature of the inlet-air. In certain embodiments, the inlet-air is heated to a range of about 50 to about 100 degrees Fahrenheit above an unheated temperature of the inlet-air. In other certain embodiments, the inlet-air is heated to a range of about 1 to 10 degreesf Fahrenheit above an unheated temperature of the inlet air for purposes of inlet and inlet compressor anti-icing.

In a further exemplary aspect of an embodiment, a filter 45 may be disposed upstream of the heat exchanger 30 in the direction of inlet air flow 18. The filter 45 may be configured to remove particulates from the inlet air flow 18 prior to the inlet air flow 18 entering the heat exchanger 30 and the gas turbine 12. In another embodiment, a filter 45 may be disposed downstream of the heat exchanger 30 in the direction of inlet air flow 18. The filter 45 may be configured to remove particulates, gases, and/or fluid droplets from the inlet air flow 18 prior to the inlet air flow 18 entering the gas turbine 12. In one embodiment, a drift eliminator 33 may be disposed downstream of the heat exchanger 30 in the direction of inlet air flow 18. The drift eliminator 33 may act to remove droplets of fluid from the gas turbine inlet air flow 18 prior to the gas turbine inlet air flow 18 entering the gas turbine 12. In one embodiment, a pump 46 may be disposed downstream of the heat exchanger 30 in the direction of heating fluid flow 25. The pump 46 may be configured to communicate heating fluid flow 25 from the heat exchanger 30 to the heating fluid heater 20.

The gas turbine inlet heating system 10 may be configured such that operation of the system 10 is regulated in relation to certain conditions. For example, a controller 50 may be operably connected to the gas turbine inlet heating system 10 to regulate the system. In one embodiment, the controller 50 may be operably connected to the heat exchanger and configured to regulate operation of the heat exchanger 20. The controller 50 may be programmed with various control algorithms and control schemes to operate and regulate gas turbine inlet heating system 10 and heat exchanger 20.

The present disclosure contemplates a controller that has the effect of controlling the operation of a gas turbine integrated with an inlet heating system of the present disclosure. In certain embodiments of the present disclosure, the controller can be configured to automatically and/or continuously monitor the gas turbine to determine whether the inlet heating system should operate. In other embodiments, the controller 50 may be operably connected to other components of the gas turbine inlet heating system 10 or the gas turbine 12 to maximize efficiency of gas turbine 12.

In certain aspects of the present disclosure a method of controlling a gas turbine system operation for part load efficiency improvement is described. The method includes utilizing a direct-contact heat exchanger as described herein to heat inlet-air before the inlet-air flows to a gas turbine compressor. The method further includes feeding the gas turbine compressor the heated inlet-air, wherein the heated inlet-air reduces an output of the gas turbine and extends the turndown range.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A gas turbine system for part load efficiency improvement and anti-icing within the inlet (16) and at the compressor inlet comprising:
a gas turbine (12) comprising a compressor (13), which receives inlet-air (18);
and
a direct-contact heat exchanger (20), the direct-contact heat exchanger (30) being configured to heat the inlet-air (18) before the inlet-air flows (18) to the compressor (13), wherein heating the inlet-air (18) prevents ice formation within an inlet system, reduces an output of the gas turbine (12), and extends the turndown range.

2. The system of claim 1, wherein an extended turndown range comprises from about 5% to about 70% of the maximum rated load of the gas turbine (12).

3. The system of claim 1 or 2, wherein the inlet-air (18) is heated to a range of about 10 to about 200 degrees Fahrenheit above an unheated temperature of the inlet-air (18).

4. The system of claim 1 or 2, wherein the inlet-air (18) is heated to a range of about 1 to 10 degrees Fahrenheit above an unheated temperature of the inlet-air (18).

5. The system of any of claims 1 to 4, wherein the direct-contact heat exchanger (30) is configured to act as one of an evaporative cooler or an inlet-air chiller.

6. The system of any preceding claim, wherein the inlet air (18) further comprises humid air.

7. The system of any preceding claim, wherein the direct-contact heat exchanger (30) utilizes a working fluid that features a liquid dessicant mixture.

8. The system of any preceding claim, wherein the direct-contact heat exchanger (30) reduces the moisture content of the inlet-air (18).

9. The system of any preceding claim, further comprising a sump, the sump configured to collect liquid from the heat exchanger (30) to recirculate the liquid back to the heat exchanger (30).

10. The system of claim 10, further comprising a drift eliminator (33), wherein, the sump is also configured to collect liquid from the drift eliminator (33) to recirculate the liquid back to the heat exchanger (30).

11. A method of controlling a gas turbine system (12) operation for part load efficiency improvement and anti-icing within the inlet (16) and at the compressor inlet, the method comprising:
utilizing a direct-contact heat exchanger (30) to heat inlet-air (18) before the inlet-air (18) flows to a gas turbine inlet (16) or to a gas turbine compressor (13);
feeding the gas turbine compressor (13) the heated inlet-air (18); and
wherein the heated inlet-air (18) reduces an output of the gas turbine (12) and extends the turndown range.

12. The method of claim 11, wherein an extended turndown range comprises from about 5% to about 70% of the maximum rated load of the gas turbine (12).

13. The method of any of claims 11 to 12, further comprising one of heating the inlet-air to a range of about 10 to about 200 degrees Fahrenheit above an unheated temperature of the inlet-air or heating the inlet-air to a range of about 1 to 10 degrees Fahrenheit above an unheated temperature of the inlet-air.

14. The method of any of claims 11 to 13, wherein the direct-contact heat exchanger is configured to act as one of an evaporative cooler or an inlet-air chiller.

15. The method of any of claims 11 to 14, further comprising utilizing a sump to collect liquid from the heat exchanger and recirculating the liquid back to the heat exchanger.
